# EUROPEAN PATENT SPECIFICATION

(11) **EP 3 395 968 B1**
(45) Date of publication and mention of the grant of the patent: **03.06.2020**
(21) Application number: 16878463.5
(22) Date of filing: 13.12.2016
(51) Int. Cl.: C22B 23/00, C22B 3/08, C22B 3/44

(54) **METHOD FOR REMOVING SULFURIZING AGENT**
VERFAHREN ZUR ENTFERNUNG EINES SULFUIDIERUNGSMITTELS
PROCÉDÉ D'ÉLIMINATION D'AGENT DE SULFURATION

(30) Priority: 25.12.2015 JP 2015255069
(43) Date of publication of application: 31.10.2018
(73) Proprietor: Sumitomo Metal Mining Co., Ltd., Tokyo 105-8716 (JP)
(72) Inventor: AMANO, Toru, Tokyo 105-8716 (JP); SHIBAYAMA, Keisuke, Tokyo 105-8716 (JP)
(74) Representative: Jones, Nicholas Andrew
(86) International application number: PCT/JP2016/086972
(87) International publication number: WO 2017/110572

(56) References cited:
- EP-A1- 2 933 235
- WO-A1-2008/138038
- JP-A- 2004 089 915
- JP-A- 2014 177 391
- JP-A- 2015 127 053
- JP-A- 2015 206 068
- TSUCHIDA N ET AL: "Development of process design for coral bay nickel project", INTERNATIONAL LATERITE NICKEL SYMPOSIUM 2004 : HELD DURING THE 2004 TMS ANNUAL MEETING IN CHARLOTTE, NORTH CAROLINA, U.S.S., MARCH 14 - 18, 2004 ; PROCEED, WARRENDALE : TMS, 1 January 2004 (2004-01-01), pages 151-160, XP009167650, ISBN: 978-0-87339-550-6
- Boyd Willis Aker ET AL: "DOWNSTREAM PROCESSING OPTIONS FOR NICKEL LATERITE HEAP LEACH LIQUORS", , 1 January 2007 (2007-01-01), XP055184418, Retrieved from the Internet: URL:http://www.researchgate.net/profile/Bo yd_Willis/publication/272566493_DOWNSTREAM _PROCESSING_OPTIONS_FOR_NICKEL_LATERITE_HE AP_LEACH_LIQUORS/links/54e952400cf27a6de11 01d78.pdf [retrieved on 2015-04-20]

## Description

### TECHNICAL FIELD

The present invention relates to a method for removing a sulfurizing agent, more specifically, it relates to a method for removing a sulfurizing agent such as hydrogen sulfide dissolved in a barren liquor obtained through a sulfurization step in the hydrometallurgical process of a nickel oxide ore.

### BACKGROUND ART

In the conventional nickel smelting, a method for producing electric nickel is performed in which dry smelting in which a nickel sulfide mineral ore is melted in a furnace at a high temperature is performed to obtain a mat with a nickel grade of about 70% by weight, this mat is leached using chlorine, the impurities are separated, and then electrolytic winning is performed.

Meanwhile, in recent years, a high pressure acid leach (HPAL) process in which a low grade nickel oxide ore is subjected to acid leaching at high temperature and high pressure has been developed and attracted attention from the viewpoint of the tendency of exhaustion of nickel sulfide mineral ore, the environment, and the like.

Unlike the conventional dry smelting method, which is a general method for smelting a nickel oxide ore, the HPAL process does not require a dry step such as a reduction and drying step but is composed of a wet step and thus it requires low energy consumption and is advantageous from the viewpoint of cost and environment.

In this HPAL process, a leachate containing nickel and cobalt and a leaching residue are obtained by subjecting a nickel oxide ore to acid leaching at high temperature and high pressure. The leachate obtained contains impurities and is thus subjected to a neutralization treatment in which a neutralizing agent added to the leachate and the impurities are separated or the like. Thereafter, in the HPAL process, mixed nickel-cobalt sulfide (hereinafter also simply referred to as "nickel sulfide") having nickel and cobalt grades of about 50% by weight is precipitated by adding a sulfurizing agent such as hydrogen sulfide gas to the leachate, from which impurities have been separated and removed, and performing a sulfurization treatment, and the mixed nickel-cobalt sulfide is separated from a post-sulfurization liquid (barren liquor) with a low nickel grade and recovered by solid-liquid separation. The nickel sulfide thus recovered can be processed into a product in the form of electric nickel or the like by being treated and subjected to an electrolytic treatment or the like in the same manner as the mat described above.

Meanwhile, the barren liquor obtained through the sulfurization treatment in the HPAL process cannot be discarded as it is since a part of hydrogen sulfide or the like used as a sulfurizing agent is dissolved and remains in the barren liquor. Hence, the barren liquor thus recovered is subjected to, for example, a treatment in which trivalent iron hydroxide (trivalent iron) is added to the barren liquor, a reaction represented by the following reaction formula is caused, and the hydrogen sulfide is immobilized and removed as sulfur.

2Fe(OH)₃ + 3H₂SO₄ → Fe₂(SO₄)₃ + 6H₂O

Fe₂(SO₄)₃ + H₂S → 2FeSO₄ + H₂SO₄ + S⁰

In such a treatment, the iron contained in the liquid before neutralization converts into iron hydroxide by the neutralization treatment and precipitates when the barren liquor is neutralized and finally discharged as waste water, and there is thus an advantage that the precipitate by neutralization can be recovered and utilized as an iron source.

Meanwhile, the barren liquor from which hydrogen sulfide dissolved has been removed by such a treatment can also be used as washing water for the leaching residue generated by the leaching treatment in the HPAL process. Incidentally, the step of washing this leaching residue with washing water is referred to as the "leaching residue washing step".

However, odor of hydrogen sulfide is generated in the vicinity of the facility and this is a problem from the viewpoint of safety and environment in a case in which the barren liquor is subjected to the leaching residue washing step or the final neutralization step in which the final neutralization treatment is performed before discharging the barren liquor as waste water in a state in which hydrogen sulfide dissolved in the barren liquor is not sufficiently decomposed and removed but remains as it is. For this reason, it is one of important treatments to sufficiently remove hydrogen sulfide dissolved in the barren liquor.

For this reason, various techniques related to the removal of hydrogen sulfide dissolved have been hitherto developed, and for example, Patent Document 1 discloses a method in which trivalent iron hydroxide is added to a solution containing hydrogen sulfide to adjust the pH to 3 or less and the oxidation-reduction potential (ORP) to 0 mV or more (Ag/AgCl reference electrode) and hydrogen sulfide dissolved in the solution is reacted with the trivalent iron to immobilize the hydrogen sulfide dissolved in the solution into the form of sulfur.

Here, in the method disclosed in Patent Document 1, it is preferable to use one that is obtained through a final neutralization step of adding an alkali to the leaching residue generated by the HPAL process and neutralizing the acid attached to the residue and contains trivalent iron hydroxide as a source of trivalent iron ion.

However, the precipitate obtained through the final neutralization step is trivalent iron hydroxide generated by adding limestone or slaked lime in the neutralization treatment in the final neutralization step, and it is a precipitate by neutralization containing impurities such as aluminum and magnesium. For this reason, in the case of using such a precipitate by neutralization containing a large amount of impurities for the removal of hydrogen sulfide dissolved, a large amount of sulfuric acid corresponding to the amount of impurities is required since precipitates of aluminum and magnesium in the precipitate are also dissolved. Furthermore, it is required to add a neutralizing agent again in the final neutralization step to precipitate aluminum and magnesium after the hydrogen sulfide dissolved is removed, and as a result, neutralization and dissolution of impurities are repeated. Patent Document 2 describes treatment methods for a barren solution.

For this reason, there is a problem that the amounts of sulfuric acid and a neutralizing agent used unnecessarily increase and this is one of the factors to increase the treatment cost in the methods which have been hitherto used.

Patent Document 1: Japanese Unexamined Patent Application, Publication No. 2004-089915

Patent Document 2: European Patent Application No. 2933235A1.

### DISCLOSURE OF THE INVENTION

### Problems to be Solved by the Invention

The present invention has been proposed in view of such circumstances and an object thereof is to provide a method for removing a sulfurizing agent such as hydrogen sulfide dissolved in a barren liquor generated in a hydrometallurgical process of a nickel oxide ore, which is capable of decreasing the amounts of chemical agents such as sulfuric acid and a neutralizing agent used while effectively removing the sulfurizing agent dissolved.

### Means for Solving the Problems

The inventors of the present invention have conducted intensive investigations to achieve the above object. As a result, it has been found out that it is possible to effectively decrease the amount of sulfuric acid used and the amount of a neutralizing agent used in the final neutralization treatment performed after the sulfurizing agent removal treatment by adding the leaching residue obtained in the leaching step in the hydrometallurgical process to the barren liquor as a source of trivalent iron ion, whereby the present invention has been completed.
(1) A first aspect of the present invention is a method for removing a sulfurizing agent dissolved in a barren liquor obtained by obtaining a leachate containing nickel and cobalt and a leaching residue by subjecting a nickel oxide ore to acid leaching using sulfuric acid at high temperature and high pressure, subjecting the leachate to a sulfurization treatment using a sulfurizing agent to generate a sulfide of nickel and cobalt and a barren liquor, and then separating the barren liquor from the sulfide by solid-liquid separation, in which a post-washing leaching residue obtained by washing the leaching residue and a sulfuric acid solution are added to the barren liquor so that a trivalent iron ion has a molar ratio of 0.05 or more with respect to a sulfurizing agent dissolved in the barren liquor and a sulfurizing agent contained in the barren liquor is immobilized and recovered as sulfur.
(2) A second aspect of the present invention is the method for removing a sulfurizing agent according to the first aspect, in which the sulfuric acid solution is added to the barren liquor so that a pH of the barren liquor is in a range of more than 1.2 and 1.5 or less.
(3) A third aspect of the present invention is the method for removing a sulfurizing agent according to the first or second aspect, in which air is blown at 1.8 Nm³ or more per 1 m³ of a slurry of barren liquor after the post-washing leaching residue is added.
(4) A fourth aspect of the present invention is the method for removing a sulfurizing agent according to any one of the first to fourth aspects, in which the sulfurizing agent is hydrogen sulfide gas.

### Effects of the Invention

According to the present invention, it is possible to effectively decrease the amounts of sulfuric acid and a neutralizing agent used while effectively removing the sulfurizing agent dissolved in the barren liquor and to perform an efficient treatment.

### BRIEF DESCRIPTION OF THE DRAWINGS

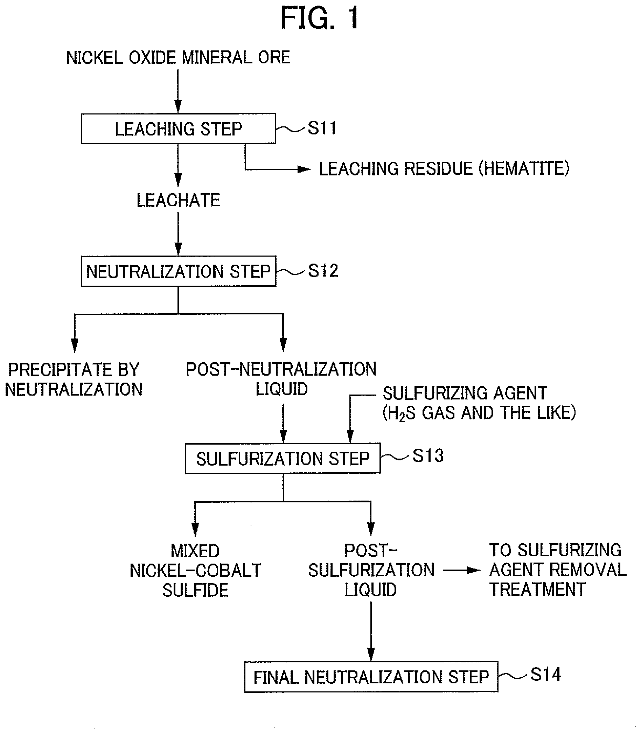

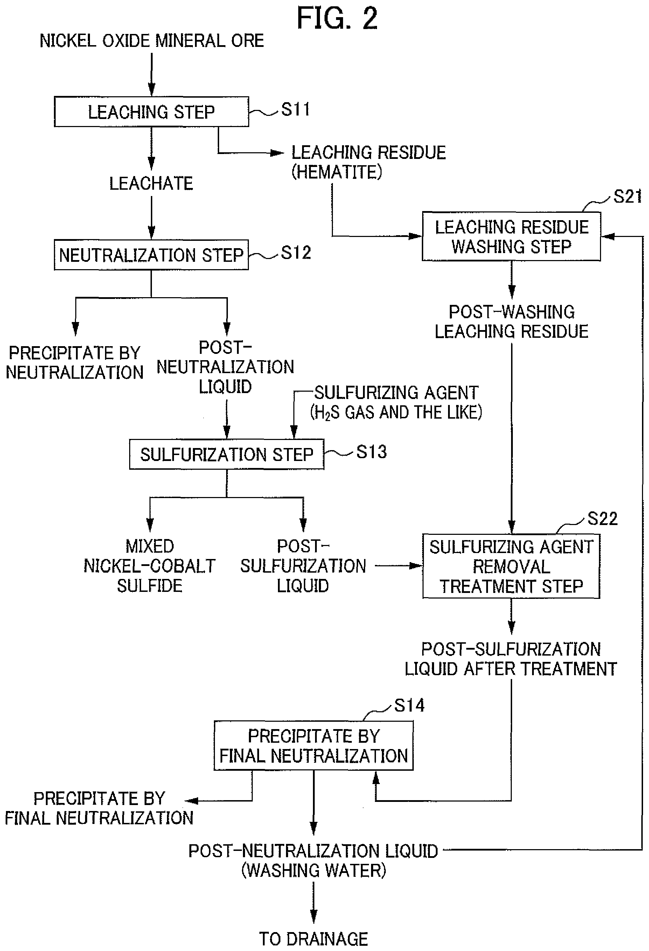

Fig. 1 is a flow chart which illustrates an example of the flow of a hydrometallurgical process of a nickel oxide ore. Fig. 2 is a flow chart which illustrates the flow when a step of a sulfurizing agent removal treatment in a barren liquor is combined with a flow chart of a hydrometallurgical process of a nickel oxide ore.

### PREFERRED MODE FOR CARRYING OUT THE INVENTION

Hereinafter, specific embodiments (hereinafter referred to as the "present embodiments") of the present invention will be described in detail with reference to the drawings. It should be noted that the present invention is not limited to the following embodiments and can be modified in various ways without changing the gist of the present invention. Incidentally, in the present specification, the notation "X to Y" (X and Y are arbitrary numerical values) means "X or more and Y or less".

### <<1. Overview>>

The method for removing a sulfurizing agent according to the present embodiment is a method for removing a dissolved sulfurizing agent such as hydrogen sulfide gas from a solution such as an acidic solution by sulfuric acid.

For details, it is a method for removing a sulfurizing agent dissolved in a barren liquor obtained by subjecting a leachate which contains nickel and cobalt and is obtained by acid leaching of a nickel oxide ore using sulfuric acid at high temperature and high pressure in a hydrometallurgical process of a nickel oxide ore to a sulfurization treatment using a sulfurizing agent to generate a sulfide of nickel and cobalt and a barren liquor and then separating the barren liquor from the sulfide by solid-liquid separation.

Specifically, in this method for removing a sulfurizing agent, a post-washing leaching residue obtained by washing the leaching residue generated by the acid leaching treatment of a nickel oxide ore and a sulfuric acid solution are added to a barren liquor in which the sulfurizing agent is dissolved and the sulfurizing agent contained in the barren liquor is immobilized and recovered as sulfur.

Incidentally, the term "immobilization" as used herein means to convert a compound into a stable form, and in the method for removing a sulfurizing agent according to the present embodiment, the sulfurizing agent such as hydrogen sulfide dissolved in the barren liquor is converted into a stable form, sulfur (S) of of a simple substance by a reaction, and this sulfur of a simple substance is generated and precipitated and removed.

In this method for removing a sulfurizing agent, the post-washing leaching residue is used as described above and a reaction represented by the following reaction formula is caused by trivalent iron (iron oxide) contained in this leaching residue. Incidentally, it is an example when hydrogen sulfide gas is used as a sulfurizing agent in this reaction.

Fe₂O₃ + 3H₂SO₄ → Fe₂(SO₄)₃ + 3H₂O

Fe₂(SO₄)₃ + H₂S → 2FeSO₄ + H₂SO₄ + S⁰

According to the method for removing a sulfurizing agent of the present embodiment, it is possible to decrease the amount of sulfuric acid used for dissolving the source of trivalent iron ion and to perform an efficient treatment. In addition, after the sulfurizing agent dissolved is removed, the barren liquor after the removal treatment is subjected to a final neutralization treatment and drained, but it is also possible to effectively decrease the amount of the neutralizing agent to be used in the final neutralization treatment and to perform an efficient operation as a whole HPAL process by using the post-washing leaching residue in the sulfurizing agent removal treatment.

### <<2. Hydrometallurgical Process of Nickel Oxide Ore>>

First, prior to a more specific description on the method for removing a sulfurizing agent, a hydrometallurgical process of a nickel oxide ore (hereinafter also simply referred to as a " hydrometallurgical process") will be described.

Fig. 1 is a flow chart which illustrates the flow of a hydrometallurgical process of a nickel oxide ore. This hydrometallurgical process includes a leaching step S11 of subjecting a nickel oxide ore to acid leaching using sulfuric acid at high temperature and high pressure to obtain a leachate and a leaching residue, a neutralization step S12 of adding a neutralizing agent to the leachate to obtain a precipitate by neutralization containing impurities and a post-neutralization liquid, and a sulfurization step S13 of adding a sulfurizing agent to the post-neutralization liquid to obtain a sulfide and a barren liquor. This hydrometallurgical process further includes a final neutralization step S14 of recovering the leaching residue generated in the leaching step S11 and the barren liquor discharged in the sulfurization step S13 and detoxifying these.

In the method for removing a sulfurizing agent according to the present embodiment, the barren liquor obtained by this hydrometallurgical process of a nickel oxide ore is taken as a target of the treatment and the sulfurizing agent dissolved in the barren liquor is removed.

### (1) Leaching step

The leaching step S11 is a step of adding sulfuric acid to a slurry of a nickel oxide ore and subjecting the slurry to a stirring treatment while raising the pressure at a temperature of 220°C to 280°C to generate a leaching slurry composed of a leachate containing nickel and cobalt and a leaching residue by using, for example, a high temperature pressurization vessel (autoclave) or the like.

Here, examples of the nickel oxide ore may mainly include so-called laterite ores such as a limonite ore and a saprolite ore. The nickel content in the laterite ore is usually 0.8% to 2.5% by weight, and nickel is contained as a hydroxide or a magnesium silicide (magnesium silicate) mineral.

In the leaching step S11, the leaching slurry composed of a leachate and a leaching residue obtained is separated into a leachate containing nickel, cobalt, and the like and a leaching residue which is hematite (Fe₂O₃) by solid-liquid separation while being washed. In this solid-liquid separation treatment, for example, the leaching slurry is mixed with a washing liquid and then subjected to a solid-liquid separation treatment by using solid-liquid separation equipment such as a thickener using a coagulant to be supplied from a coagulant supply facility or the like. Specifically, the leaching slurry is first diluted with the washing liquid and then the leaching residue in the slurry is concentrated as a precipitate in the thickener.

The leachate separated by the solid-liquid separation treatment of the leaching slurry is transferred to the neutralization step S12 of the next step while the leaching residue is recovered from the bottom portion of the thickener. Incidentally, the leaching residue recovered is transferred to the leaching residue washing step and subjected to a washing treatment using washing water.

### (2) Neutralization Step

The neutralization step S12 is a step of adding a neutralizing agent to the leachate obtained in the leaching step S11 described above to adjust the pH and thus to obtain a precipitate by neutralization containing an impurity element and a post-neutralization liquid. By the neutralization treatment in this neutralization step S12, valuable metals such as nickel and cobalt are contained in the post-neutralization liquid and a greater part of impurities such as iron and aluminum is converted into a precipitate by neutralization.

As the neutralizing agent, conventionally known one can be used, and examples thereof may include calcium carbonate, slaked lime, and sodium hydroxide.

In the neutralization treatment in the neutralization step S12, it is preferable to adjust the pH to a range of 1 to 4 and it is more preferable to adjust the pH to a range of 1.5 to 2.5 while suppressing oxidation of the leachate separated. When the pH is less than 1, there is a possibility that the neutralization insufficiently proceeds and the slurry cannot be separated into a precipitate by neutralization and a post-neutralization liquid. On the other hand, when the pH exceeds 4, there is a possibility that not only impurities such as aluminum but also valuable metals such as nickel and cobalt are contained in the precipitate by neutralization.

### (3) Sulfurization Step

The sulfurization step S13 is a step of adding a sulfurizing agent to the post-neutralization liquid obtained in the neutralization step S12 described above to obtain a sulfide (mixed nickel-cobalt sulfide) of nickel and cobalt and a barren liquor. By the sulfurization treatment in this sulfurization step S13, nickel, cobalt, zinc, and the like are converted into a sulfide and the others are contained in the barren liquor.

Specifically, in the sulfurization step S13, a sulfurizing agent is added to the post-neutralization liquid obtained to cause a sulfurization reaction by which nickel and cobalt contained in the post-neutralization liquid are sulfurized into the form of a sulfide. By this, a sulfide of nickel and cobalt containing a small amount of impurity components and a post-sulfurization liquid (barren liquor) with a nickel concentration stabilized to a low level are generated.

As the sulfurizing agent, for example, hydrogen sulfide gas, sodium sulfide, and sodium hydrosulfide can be used, but among these, it is particularly preferable to use hydrogen sulfide gas from the viewpoint of ease of handling, cost, and the like.

In this sulfurization treatment, the barren liquor, which is an aqueous solution component, is allowed to overflow and recovered as well as a slurry of mixed nickel-cobalt sulfide is subjected to a precipitation and separation treatment using precipitation and separation equipment such as a thickener to separate and recover the mixed nickel-cobalt sulfide from the bottom portion of the thickener.

Here, in the method for removing a sulfurizing agent according to the present embodiment, a barren liquor obtained by subjecting the barren liquor obtained by the sulfurization treatment in the sulfurization step S13, namely, the slurry after the sulfurization treatment, to a solid-liquid separation treatment is taken as the target of the treatment.

### (4) Final Neutralization Step

In the final neutralization step S14, the barren liquor generated in the sulfurization step S13 described above, namely, the barren liquor containing impurity elements such as iron, magnesium, and manganese is subjected to a neutralization treatment (detoxification treatment) for adjusting the pH to a predetermined pH range which satisfies the effluent standards.

In the present embodiment, the barren liquor from which the sulfurizing agent such as hydrogen sulfide dissolved is removed through the treatment for removing the sulfurizing agent in the barren liquor, which will be described in detail later, is subjected to a neutralization treatment.

The method of detoxification treatment in the final neutralization step S14, namely, the method of pH adjustment is not particularly limited, but for example, the pH can be adjusted to a predetermined range by adding a neutralizing agent such as a calcium carbonate (limestone) slurry or a calcium hydroxide (slaked lime) slurry.

In addition, in the final neutralization treatment in the final neutralization step S14, it is possible to perform a stepwise treatment composed of a first stage neutralization treatment (first final neutralization step) using limestone as a neutralizing agent and a second stage neutralization treatment (second final neutralization step) using a slaked lime as a neutralizing agent. It is possible to perform an efficient and effective neutralization treatment by performing a stepwise neutralization treatment in this manner.

Specifically, in the first final neutralization step, the barren liquor recovered is charged into a neutralization treatment tank, a limestone slurry is added thereto, and the mixture is subjected to a stirring treatment. In this first final neutralization step, the pH of the barren liquor is adjusted to 4 to 5 by addition of a limestone slurry.

Next, in the second final neutralization step, a slaked lime slurry is added to the solution to which a limestone slurry has been added and which has been subjected to the first stage neutralization treatment and the mixture is subjected to a stirring treatment. In this second final neutralization step, the pH of the barren liquor is raised to 8 to 9 by addition of a slaked lime slurry.

In the final neutralization step S14, a residue by neutralization treatment (precipitate by final neutralization) is generated by performing such a two-stage neutralization treatment and is stored (tailing residue) in a tailing dam. Meanwhile, the solution after the neutralization treatment (post-neutralization liquid) satisfies the effluent standards and is discharged to the outside of the system. Incidentally, in the neutralization treatment in this final neutralization step S14, the iron contained in the barren liquor is immobilized and separated in the form of iron hydroxide (Fe(OH)₃).

Here, in the final neutralization treatment in this final neutralization step S14, the amount of neutralizing agent such as slaked lime or limestone is determined depending on the amount of impurity element ions such as a magnesium ion and a manganese ion remaining in the barren liquor. Hence, the amount of neutralizing agent used also increases when the amount of impurities remaining in the barren liquor is larger.

With regard to this point, in the present embodiment, a treatment for removing the sulfurizing agent dissolved in the barren liquor obtained in the sulfurization step S13 is performed (sulfurizing agent removal treatment step S22) prior to the final neutralization step S14 and the leaching residue after washing is used as a source of trivalent iron ion in the sulfurizing agent removal treatment step S22. For this reason, it is possible to transfer the barren liquor with a low concentration of impurities such as iron, magnesium, manganese, and aluminum to the final neutralization step S14, and as a result, it is possible to effectively decrease the amount of neutralizing agent used in the final neutralization step S14. The details will be described later.

### <<3. Detailed Description on Method for Removing Sulfurizing Agent>>

Meanwhile, in the hydrometallurgical process of a nickel oxide ore described above, the sulfurizing agent such as hydrogen sulfide, which has been added in order to cause a sulfurization reaction, is dissolved in the barren liquor generated through the sulfurization treatment in the sulfurization step S13 in some cases. As the barren liquor generated by the sulfurization treatment is transferred to the final neutralization step S14 and subjected to a detoxification treatment, components such as magnesium and manganese are removed from the barren liquor and the barren liquor is discharged to the outside of the system in a state of satisfying the waste water quality standards. However, in a case in which the sulfurizing agent remains in the barren liquor, the barren liquor cannot be discharged to the outside of the system unless a treatment for removing the sulfurizing agent is performed.

Hence, in the present embodiment, the post-washing leaching residue obtained by washing the leaching residue generated by the acid leaching treatment of a nickel oxide ore and a sulfuric acid solution are added to the barren liquor in which the sulfurizing agent is dissolved and the sulfurizing agent contained in the barren liquor is thus immobilized as sulfur. In other words, the sulfurizing agent dissolved such as hydrogen sulfide is recovered and removed from the barren liquor in the form of solid sulfur.

Fig. 2 is a flow chart which illustrates the flow when a step (sulfurizing agent removal treatment step) of sulfurizing agent removal treatment in a barren liquor is combined with a flow chart of a hydrometallurgical process of a nickel oxide ore. Incidentally, an embodiment in which hydrogen sulfide dissolved in a barren liquor is removed will be described below by taking a case in which hydrogen sulfide gas is used as a sulfurizing agent in the sulfurization step S13 as an example.

The barren liquor, which is obtained after mixed nickel-cobalt sulfide is separated and recovered in the sulfurization step S13 in the hydrometallurgical process of a nickel oxide ore, is an acidic solution by sulfuric acid which has a nickel ion concentration of about 0.04 g/L to 0.10 g/L and contains impurities such as iron, manganese, magnesium, aluminum, chromium, and lead. Moreover, hydrogen sulfide used in the sulfurization treatment in the sulfurization step S13 is dissolved in this barren liquor at a concentration of about 10 mg/L to 150 mg/L as described above.

For the removal of hydrogen sulfide dissolved in the barren liquor, it is required that a trivalent iron ion is present in the solution at a proportion of 0.05 or more with respect to the hydrogen sulfide dissolved in terms of molar ratio. This makes it possible to effectively immobilize hydrogen sulfide as sulfur.

At this time, in the present embodiment, a leaching residue generated in the leaching step S11 in the hydrometallurgical process is used as a source of trivalent iron ion. More specifically, the leaching residue after washing to be obtained by transferring the leaching residue recovered in the leaching step S11 by solid-liquid separation to a leaching residue washing step S21 and subjecting the leaching residue to a washing treatment is used. Incidentally, this leaching residue after washing is referred to as a "post-washing leaching residue".

Hitherto, in the sulfurizing agent removal treatment, the precipitate by final neutralization generated in the final neutralization step S14 has been used as a source of trivalent iron ion. The reaction for removing hydrogen sulfide can effectively proceed since the precipitate by final neutralization contains a large amount of trivalent iron hydroxide. However, the precipitate by final neutralization generated in the final neutralization step S14 contains a large amount of impurities such as magnesium, manganese, and aluminum in addition to trivalent iron, and thus sulfuric acid is used to dissolve these impurities, the amount of sulfuric acid used increases, and the amount of neutralizing agent used in the subsequent neutralization treatment also increases in the case of using the precipitate by final neutralization for the hydrogen sulfide removal treatment.

On the contrary, in the method for removing a sulfurizing agent according to the present embodiment, it is possible to effectively decrease the amount of sulfuric acid used and to perform an efficient treatment by using the post-washing leaching residue as a source of trivalent iron ion. In addition, it is possible to effectively decrease the amount of neutralizing agent used in the final neutralization step S14 and to perform an efficient operation as a whole hydrometallurgical process.

### (Leaching Residue Washing Step)

In the leaching residue washing step S21, the leaching residue recovered in the leaching step S11 is subjected to a washing treatment using washing water to remove impurities attached to the leaching residue.

The washing water is not particularly limited, and for example, water can be used. In addition, a post-neutralization liquid obtained after the precipitate by final neutralization is separated and removed in the final neutralization step S14 in the hydrometallurgical process may also be used as the washing water. The post-neutralization liquid is a liquid from which impurities have been removed by the neutralization treatment in the final neutralization step S14, and it is possible to effectively utilize the treated water in the hydrometallurgical process and to perform a more efficient treatment by using this post-neutralization liquid as washing water.

### (Sulfurizing Agent Removal Treatment Step)

In the sulfurizing agent removal treatment step S22, a sulfuric acid solution is added to the barren liquor in which hydrogen sulfide is dissolved as well as the post-washing leaching residue described above is added to the barren liquor. By this, a reaction represented by the following reaction formula takes place and hydrogen sulfide dissolved in the barren liquor is oxidized and immobilized as solid sulfur.

Fe₂O₃ + 3H₂SO₄ → Fe₂(SO₄)₃ + 3H₂O

Fe₂(SO₄)₃ + H₂S → 2FeSO₄ + H₂SO₄ + S⁰

Here, as represented by the above reaction formula as well, the leaching residue to be used contains hematite (Fe₂O₃) as the main component and thus the trivalent iron of hematite more hardly dissolves as compared to, for example, that of the precipitate by final neutralization to be generated in the final neutralization step S14. For this reason, it is preferable to add a sulfuric acid solution to the barren liquor so that the pH of the barren liquor is 1.5 or less and to cause the reaction in a state in which the pH is maintained in the hydrogen sulfide removal treatment in the sulfurizing agent removal treatment step S22. Incidentally, when the pH exceeds 1.5, the amount of hematite dissolved also decreases although the amount of sulfuric acid used decreases and there is thus a possibility that the supply of trivalent iron is insufficient and the amount of dissolved hydrogen sulfide to be removed decreases.

In addition, it is preferable to adjust the pH of the barren liquor to exceed 1.2. In a case in which the pH of the barren liquor is 1.2 or less, impurities such as magnesium and aluminum contained in the leaching residue also dissolve although the amount of trivalent iron dissolved increases and the amount of post-washing leaching residue required decreases, and thus the amount of neutralizing agent to be used in the neutralization treatment in the final neutralization step S14 performed after the hydrogen sulfide removal treatment increases as well as the amount of sulfuric acid used increases.

For this reason, it is preferable to adjust the pH of the barren liquor to a range of more than 1.2 and 1.5 or less and it is more preferable to adjust the pH to a range of 1.4 or more and 1.5 or less. Incidentally, it is considered that it is preferable to use concentrated sulfuric acid with a high concentration as the sulfuric acid solution, but the concentration thereof is not particularly limited. However, in the case of a sulfuric acid solution with an extremely low concentration, the reaction time for immobilizing hydrogen sulfide as sulfur increases. In addition, the amount of sulfuric acid to be added increases and the size of equipment such as a tank and a pump inevitably increases when a sulfuric acid solution with a low concentration is used. Hence, it is preferable to use, for example, one with a concentration of 0.05 N or more as the sulfuric acid solution.

In addition, in the hydrogen sulfide removal treatment, it is preferable to blow the air at a proportion of 1.8 Nm³ or more per 1 m³ of the slurry of barren liquor after the post-washing leaching residue is added to the barren liquor. This makes it possible to promote the oxidation of hydrogen sulfide dissolved in the barren liquor.

Incidentally, as the condition of oxidation-reduction potential (ORP) in the hydrogen sulfide removal treatment, it is preferable to set the ORP to 150 mV or more (silver/silver chloride reference electrode) and to cause the oxidation reaction until such an ORP condition is acquired.

The hydrogen sulfide removal treatment can be performed, for example, by using a stirring reaction tank equipped with a stirring means, and the post-washing leaching residue and the sulfuric acid solution are added into the reaction tank as well as the barren liquor is housed in the stirring reaction tank. Moreover, for example, the pH condition is set to a range of more than 1.2 and 1.5 or less, the ORP condition is set to 150 mV or more, and the reaction is then caused while stirring the barren liquor. The reaction time (retention time) of the barren liquor is not particularly limited, but for example, it is preferable to set the reaction time to 30 minutes or longer.

As described above, according to the method for removing a sulfurizing agent of the present embodiment, it is possible to decrease the amount of sulfuric acid used for dissolving the source of trivalent iron ion and to perform an efficient treatment. In addition, after the sulfurizing agent dissolved is removed from the barren liquor, the barren liquor after being subjected to the removal treatment is subjected to the final neutralization treatment and then drained, but it is possible to effectively decrease the amount of neutralizing agent to be used in the final neutralization treatment and to perform an efficient operation as a whole HPAL process by using the post-washing leaching residue in the sulfurizing agent removal treatment.

### EXAMPLES

Hereinafter, the present invention will be more specifically described with reference to Examples, but the present invention is not limited to the following Examples at all. Incidentally, in Examples and Comparative Examples, the operation was performed under a condition (amount to be treated) for producing 1 ton of nickel sulfide in terms of nickel amount in a hydrometallurgical process of a nickel oxide ore.

### <<Treatment in Examples and Comparative Examples>>

### [Example 1]

As illustrated in the hydrometallurgical process of a nickel oxide ore of Fig. 1 and Fig. 2, first a slurry of a nickel oxide ore was charged into an autoclave and subjected to a leaching treatment using sulfuric acid at high temperature and high pressure to obtain a leaching slurry containing a leachate and a leaching residue (hematite, Fe₂O₃) (leaching step S11). The analysis results for the composition of the leaching slurry are presented in the following Table 1.

**[Table 1]**

| Liquid (g/L) | | | | | | | | | | | | | |
|---|---|---|---|---|---|---|---|---|---|---|---|---|---|
| Pb | Zn | Cu | Ni | Co | Fe | Mn | Cr | Ca | Si | Al | Mg | | |
| 0.00 | 0.00 | 0.00 | 0.11 | 0.01 | 1.51 | 2.98 | 0.14 | 0.65 | 0.26 | 3.92 | 6.64 | | |

| Solid (dry-%) | | | | | | | | | | | | Density | %Solid |
|---|---|---|---|---|---|---|---|---|---|---|---|---|---|
| Pb | Zn | Cu | Ni | Co | Fe | Mn | Cr | Ca | Si | Al | Mg | (kg/L) | (%) |
| 0.00 | 0.00 | 0.00 | 0.05 | 0.00 | 43.75 | 0.05 | 1.91 | 3.03 | 3.50 | 1.11 | 0.08 | 1.65 | 49.1 |

Next, impurities were neutralized and removed from the leachate obtained by solid-liquid separation of the leaching slurry (neutralization step S12), and hydrogen sulfide gas as a sulfurizing agent was added to the leachate and the sulfurization treatment was performed (sulfurization step S13). By the sulfurization reaction in this sulfurization step S13, nickel and cobalt in the leachate were sulfurized and mixed nickel-cobalt sulfide was generated. The sulfide thus generated was recovered by solid-liquid separation of the slurry after the sulfurization treatment using a thickener.

Meanwhile, hydrogen sulfide, which was a sulfurizing agent used in the sulfurization treatment, was dissolved in the post-sulfurization liquid (barren liquor) after being subjected to the separation and recovery of sulfide at a proportion of 30 mg/L. Hence, a treatment for removing hydrogen sulfide dissolved in the barren liquor was performed.

In the hydrogen sulfide removal treatment, trivalent iron ions (3.6 kg in terms of the amount of iron) were added to the barren liquor with a concentration of hydrogen sulfide dissolved of 30 mg/L so as to have a molar ratio of 0.05 with respect to the hydrogen sulfide dissolved. Specifically, in Example 1, the leaching residue which was obtained in the leaching step S11 in the hydrometallurgical process of a nickel oxide ore and contained hematite as the main component was used as the source of trivalent iron ion, and a slurry of post-washing leaching residue obtained by washing the leaching residue was supplied to the barren liquor.

In addition, a diluted sulfuric acid solution was added to the barren liquor so that the pH of the barren liquor was 1.5 and the oxidation-reduction potential (ORP) was 250 mV (silver/silver chloride reference electrode). Furthermore, the air was blown into the slurry of barren liquor to which the leaching residue was added at 1.8 Nm³ or more per 1.0 m³ of the slurry of barren liquor. By this, a reaction for immobilizing hydrogen sulfide dissolved in the barren liquor as sulfur was caused and the hydrogen sulfide was removed.

After hydrogen sulfide dissolved in the barren liquor was removed as sulfur in this manner, the concentration of hydrogen sulfide in the barren liquor after being subjected to the removal of hydrogen sulfide was measured, and as a result, hydrogen sulfide had been sufficiently removed as the concentration was less than 1 mg/L of the lower limit of analysis. Incidentally, the supply amount of the slurry of post-washing leaching residue used in this hydrogen sulfide removal treatment was 25.7 m³.

Here, the amounts of impurities eluted from the leaching residue, the amount of sulfuric acid solution required, and the amount of neutralizing agent (limestone and slaked lime) required for the neutralization of eluted impurities when 25.7 m³ of the slurry of leaching residue was added to the barren liquor and the pH was adjusted to 1.5 using a sulfuric acid solution are presented in the following Table 2.

**[Table 2]**

| (Leaching residue25.7m³, pH1.5) | Pb | Zn | Cu | Ni | Co | Fe³⁺ | Mn | Cr | Ca | Si | Al | Mg | Amount required | |
|---|---|---|---|---|---|---|---|---|---|---|---|---|---|---|
| Amount of metal eluted at pH 1.5[kg] | 0.00 | 0.00 | 0.00 | 0.05 | 0.00 | 3,63 | 0.66 | 0.04 | 0.09 | 0.07 | 0.97 | 0.29 | | |
| Amount of sulfuric acid solution required [kg] | 0.0 | 0.0 | 0.0 | 0.1 | 0.0 | 9.1 | 1.2 | 0.1 | 0.2 | 0.3 | 5.3 | 1.2 | Sum | 17.3kg |
| Amount of limestone required in final neutralization step [kg] | 0.0 | 0.0 | 0.0 | 0.0 | 0.0 | 9.7 | 0.0 | 0.0 | 0.0 | 0.4 | 5.4 | 0.0 | Sum | 15.5kg |
| Amount of slaked lime required in final neutralization step [kg] | 0.0 | 0.0 | 0.0 | 0.1 | 0.0 | 0.0 | 0.9 | 0.1 | 0.0 | 0.0 | 0.0 | 0.9 | Sum | 1.9kg |

### [Comparative Example 1]

In Comparative Example 1, in the treatment for removing hydrogen sulfide dissolved in the barren liquor, the precipitate by final neutralization obtained in the final neutralization step S14 in the hydrometallurgical process was added to the barren liquor.

Specifically, trivalent iron ions (3.6 kg in terms of the amount of iron) were added to the barren liquor with a concentration of hydrogen sulfide dissolved of 30 mg/L so as to have a molar ratio of 0.05 with respect to the hydrogen sulfide dissolved. The precipitate by final neutralization obtained in the final neutralization step S14 in the hydrometallurgical process of a nickel oxide ore was used as the source of trivalent iron ion, and a slurry of the precipitate by final neutralization was supplied to the barren liquor. Incidentally, the analysis results for the composition of the post-neutralization slurry generated in the final neutralization step S14 are presented in the following Table 3. As presented in Table 3, the precipitate by final neutralization contains trivalent iron hydroxide and hydroxides of aluminum and magnesium.

**[Table 3]**

| Liquid (g/L) | | | | | | | | | | | | | |
|---|---|---|---|---|---|---|---|---|---|---|---|---|---|
| Pb | Zn | Cu | Ni | Co | Fe | Mn | Cr | Ca | Si | Al | Mg | | |
| 0.00 | 0.16 | 0.02 | 1.60 | 0.20 | 0.26 | 0.66 | 0.00 | 571.9 | 0.96 | 2.11 | 5.17 | | |

| Solid (dry-%) | | | | | | | | | | | | Density | %Solid |
|---|---|---|---|---|---|---|---|---|---|---|---|---|---|
| Pb | Zn | Cu | Ni | Co | Fe | Mn | Cr | Ca | Si | Al | Mg | (kg/L) | (%) |
| 0.00 | 0.02 | 0.00 | 0.08 | 0.01 | 34.76 | 0.53 | 1.54 | 6.37 | 2.49 | 1.20 | 0.49 | 1.24 | 26.3 |

In addition, a diluted sulfuric acid solution was added to the barren liquor so that the pH of the barren liquor was 1.7 and the ORP was 250 mV. Furthermore, the air was blown into the slurry of barren liquor to which the precipitate by final neutralization was added at 1.8 Nm³ or more per 1.0 m³ of the slurry of barren liquor.

After hydrogen sulfide dissolved in the barren liquor was removed as sulfur in this manner, the concentration of hydrogen sulfide in the barren liquor after being subjected to the removal of hydrogen sulfide was measured, and as a result, hydrogen sulfide had been sufficiently removed as the concentration was less than 1 mg/L of the lower limit of analysis. Incidentally, the supply amount of the slurry of precipitate by final neutralization used in this hydrogen sulfide removal treatment was 10.8 m³.

Here, the amounts of impurities eluted from the precipitate by final neutralization, the amount of sulfuric acid solution required, and the amount of neutralizing agent (limestone and slaked lime) required for the neutralization of eluted impurities when 10.8 m³ of the slurry of precipitate by final neutralization was added to the barren liquor and the pH was adjusted to 1.7 using a sulfuric acid solution are presented in the following Table 4.

**[Table 4]**

| (Precipitate by final neutralization 10.8m³, pH1.7) | Pb | Zn | Cu | Ni | Co | Fe³⁺ | Mn | Cr | Ca | Si | Al | Mg | Amount required | |
|---|---|---|---|---|---|---|---|---|---|---|---|---|---|---|
| Amount of metal eluted at pH 1.7 [kg] | 0.00 | 0.21 | 0.04 | 1.15 | 0.11 | 3.63 | 16.18 | 0.75 | 0.91 | 4.10 | 22.14 | 38.45 | | |
| Amount of sulfuric acid solution required [kg] | 0.0 | 0.3 | 0.0 | 1.9 | 0.2 | 9.1 | 28.9 | 2.1 | 2.2 | 14.3 | 120.5 | 155.1 | Sum | 334.6kg |
| Amount of limestone required in final neutralization step [kg] | 0.0 | 0.0 | 0.0 | 0.0 | 0.0 | 9.8 | 0.0 | 0.0 | 0.0 | 21.9 | 123.0 | 0.0 | Sum | 154.6kg |
| Amount of slaked lime required in final neutralization step [kg] | 0.0 | 0.2 | 0.0 | 1.5 | 0.1 | 0.0 | 21.8 | 1.6 | 0.0 | 0.0 | 0.0 | 117.1 | Sum | 142.4kg |

### [Comparative Example 2]

In Comparative Example 2, in the treatment for removing hydrogen sulfide dissolved in the barren liquor, a slurry of post-washing leaching residue was added to the barren liquor in the same manner as in Example 1 but the pH of the barren liquor was adjusted to 1.2 by the addition of a sulfuric acid solution.

Specifically, trivalent iron ions (3.6 kg in terms of the amount of iron) were added to the barren liquor with a concentration of hydrogen sulfide dissolved of 30 mg/L so as to have a molar ratio of 0.05 with respect to the hydrogen sulfide dissolved. The leaching residue which was obtained in the leaching step S11 in the hydrometallurgical process of a nickel oxide ore and contained hematite as the main component was used as the source of trivalent iron ion, and a slurry of post-washing leaching residue obtained by washing the leaching residue was supplied to the barren liquor.

In addition, a diluted sulfuric acid solution was added to the barren liquor so that the pH of the barren liquor was 1.2 and the ORP was 250 mV. Furthermore, the air was blown into the slurry of barren liquor to which the post-washing leaching residue was added at 1.8 Nm³ or more per 1.0 m³ of the slurry of barren liquor.

After hydrogen sulfide dissolved in the barren liquor was removed as sulfur in this manner, the concentration of hydrogen sulfide in the barren liquor after being subjected to the removal of hydrogen sulfide was measured, and as a result, hydrogen sulfide had been sufficiently removed as the concentration was less than 1 mg/L of the lower limit of analysis. Incidentally, the supply amount of the slurry of leaching residue used in this hydrogen sulfide removal treatment was 7.2 m³.

Here, the amounts of impurities eluted from the leaching residue, the amount of sulfuric acid solution required, and the amount of neutralizing agent (limestone and slaked lime) required for the neutralization of eluted impurities when 7.2 m³ of the slurry of leaching residue was added to the barren liquor and the pH was adjusted to 1.2 using a sulfuric acid solution are presented in the following Table 5.

**[Table 5]**

| (Leaching residue 7.2m³, pH1.2) | Pb | Zn | Cu | Ni | Co | Fe³⁺ | Mn | Cr | Ca | Si | Al | Mg | Amount required | |
|---|---|---|---|---|---|---|---|---|---|---|---|---|---|---|
| Amount of metal eluted at pH 1.2[kg] | 0.00 | 0.00 | 0.00 | 0.08 | 0.00 | 3.63 | 1.82 | 0.09 | 0.55 | 0.09 | 1.16 | 4.59 | | |
| Amount of sulfuric acid solution required [kg] | 0.0 | 0.0 | 0.0 | 0.1 | 0.0 | 9.1 | 3.3 | 0.3 | 1.4 | 0.3 | 6.3 | 18.5 | Sum | 39.2kg |
| Amount of limestone required in final neutralization step [kg] | 0.0 | 0.0 | 0.0 | 0.0 | 0.0 | 9.8 | 0.0 | 0.0 | 0.0 | 0.5 | 6.4 | 0.0 | Sum | 16.7kg |
| Amount of slaked lime required final neutralization step [kg] | 0.0 | 0.0 | 0.0 | 0.1 | 0.0 | 0.0 | 2.5 | 0.2 | 0.0 | 0.0 | 0.0 | 14.0 | Sum | 16.7kg |

### [Comparative Example 3]

In Comparative Example 3, in the treatment for removing hydrogen sulfide dissolved in the barren liquor, a slurry of post-washing leaching residue was added to the barren liquor in the same manner as in Example 1 but the pH of the barren liquor was adjusted to 1.8 by the addition of a sulfuric acid solution.

However, the hematite added hardly dissolved and it was not possible to obtain trivalent iron ions in the barren liquor.

Hence, it has been found that it is difficult to remove hydrogen sulfide dissolved under a condition of 1.8 as the pH condition of the barren liquor in the sulfurizing agent removal treatment.

### <<Result>>

From the results described above, it has been found that it is possible to greatly decrease the amount of sulfuric acid solution used as compared to Comparative Example 1 in which the precipitate by final neutralization was added as a source of trivalent iron ion by adding a post-washing leaching residue to a barren liquor in which hydrogen sulfide is dissolved as in Example 1. In addition, it has been found that it is also possible to greatly decrease the amount of the neutralizing agent (limestone and slaked lime) to be used in the final neutralization treatment after the removal of hydrogen sulfide.

In comparison between Example 1 and Comparative Example 1, as a reason for that the amount of sulfuric acid solution used and the amount of neutralizing agent used increased in the treatment of Comparative Example 1, it is considered that the precipitate by final neutralization added contains a large amount of trivalent iron hydroxide and hydroxides of aluminum and magnesium generated in the final neutralization step together with the leaching residue containing hematite as the main component and it is considered that the amount of sulfuric acid solution required for the dissolution of aluminum, magnesium, and the like and the amount of neutralizing agent required for the neutralization treatment are increased by the amount of aluminum, magnesium, and the like present in the precipitate even though the supply amount of trivalent iron ions is the same.

In addition, in comparison between Example 1 and Comparative Example 2, the amount of neutralizing agent required for the neutralization treatment increases as well as the amount of sulfuric acid solution required increases in a case in which a sulfuric acid solution is added to the barren liquor so as to adjust the pH of the barren liquor to 1.2 (Comparative Example 2). It is considered that this is because the dissolved amount of impurities such as magnesium and aluminum which have been contained in the leaching residue also increases although the amount of trivalent iron dissolved increases and the amount of leaching residue required decreases in a case in which the pH is lowered to 1.2 and thus the amount of sulfuric acid solution required and the amount of neutralizing agent (limestone and slaked lime) required for the neutralization treatment increase.

## Claims

1. A method for removing a sulfurizing agent dissolved in a barren liquor obtained by obtaining a leachate containing nickel and cobalt and a leaching residue by subjecting a nickel oxide ore to acid leaching using sulfuric acid at high temperature and high pressure, subjecting the leachate to a sulfurization treatment using a sulfurizing agent to generate a sulfide of nickel and cobalt and a barren liquor, and then separating the barren liquor from the sulfide by solid-liquid separation, wherein
a post-washing leaching residue obtained by washing the leaching residue and a sulfuric acid solution are added to the barren liquor so that a trivalent iron ion has a molar ratio of 0.05 or more with respect to a sulfurizing agent dissolved in the barren liquor and the sulfurizing agent contained in the barren liquor is immobilized and recovered as sulfur.

2. The method for removing a sulfurizing agent according to claim 1, wherein the sulfuric acid solution is added to the barren liquor so that a pH of the barren liquor is in a range of more than 1.2 and 1.5 or less.

3. The method for removing a sulfurizing agent according to claim 1 or 2, wherein air is blown at 1.8 Nm³ or more per 1 m³ of a slurry of barren liquor after the post-washing leaching residue is added.

4. The method for removing a sulfurizing agent according to any one of claims 1 to 3, wherein the sulfurizing agent is hydrogen sulfide gas.

## Patentansprüche

1. Verfahren zum Entfernen eines Sulfurierungsmittels, das in einer armen Lauge gelöst ist, die erhalten wurde durch Gewinnen eines Auslaugungsprodukts, das Nickel und Cobalt enthält, und eines Auslaugungsrückstands beim Ausführen einer sauren Auslaugung unter Verwendung von Schwefelsäure bei hoher Temperatur und hohem Druck an einem Nickeloxiderz, Ausführen einer Sulfurierungsbehandlung unter Verwendung eines Sulfurierungsmittels am Auslaugungsprodukt, so dass ein Sulfid von Nickel und Cobalt sowie eine arme Lauge erzeugt werden, und dann Abtrennen der armen Lauge vom Sulfid durch Fest-Flüssig-Trennung, wobei
ein Auslaugungsrückstand nach Waschbehandlung, der durch Waschen des Auslaugungsrückstands erhalten wurde, und eine Schwefelsäurelösung zur armen Lauge zugegeben werden, so dass ein trivalentes Eisenion ein Molverhältnis von 0,05 oder darüber in Bezug auf ein in der armen Lauge gelöstes Sulfurierungsmittel aufweist und das in der armen Lauge enthaltene Sulfurierungsmittel immobilisiert und als Schwefel zurückgewonnen wird.

2. Verfahren zum Entfernen eines Sulfurierungsmittels nach Anspruch 1, wobei die Schwefelsäurelösung zur armen Lauge zugegeben wird, so dass ein pH-Wert der armen Lauge in einem Bereich von über 1,2 und 1,5 oder darunter liegt.

3. Verfahren zum Entfernen eines Sulfurierungsmittels nach Anspruch 1 oder 2, wobei nach Zugabe des Auslaugungsrückstands nach Waschbehandlung Luft mit 1,8 Nm³ oder mehr pro 1 m³ in eine Aufschlämmung von armer Lauge eingeblasen wird.

4. Verfahren zum Entfernen eines Sulfurierungsmittels nach einem der Ansprüche 1 bis 3, wobei es sich bei dem Sulfurierungsmittel um Schwefelwasserstoffgas handelt.

## Revendications

1. Procédé d'élimination d'un agent de sulfuration dissous dans une liqueur stérile obtenue en obtenant un lixiviat contenant du nickel et du cobalt et un résidu de lixiviation en soumettant un minerai d'oxyde de nickel à une lixiviation acide avec acide sulfurique à haute température et haute pression, en soumettant le lixiviat à un traitement de sulfuration avec un agent de sulfuration pour générer un sulfure de nickel et de cobalt et une liqueur stérile, et ensuite en séparant la liqueur stérile du sulfure par séparation solide-liquide, dans lequel
un résidu de lixiviation post-lavage obtenu par lavage du résidu de lixiviation et une solution d'acide sulfurique sont ajoutés à la liqueur stérile de sorte qu'un ion fer trivalent a un rapport molaire de 0,05 ou plus par rapport à un agent de sulfuration dissous dans la liqueur stérile et l'agent de sulfuration contenu dans la liqueur stérile est immobilisé et récupéré sous forme de soufre.

2. Procédé d'élimination d'un agent de sulfuration selon la revendication 1, dans lequel la solution d'acide sulfurique est ajoutée à la liqueur stérile de sorte qu'un pH de la liqueur stérile est dans une plage allant de plus de 1,2 à 1,5 ou moins.

3. Procédé d'élimination d'un agent de sulfuration selon la revendication 1 ou 2, dans lequel de l'air est insufflé à raison de 1,8 Nm³ ou plus par 1 m³ d'une suspension épaisse de liqueur stérile après que le résidu de lixiviation post-lavage a été ajouté.

4. Procédé d'élimination d'un agent de sulfuration selon l'une quelconque des revendications 1 à 3, dans lequel l'agent de sulfuration est le sulfure d'hydrogène gazeux.
